# EUROPEAN PATENT APPLICATION

(11) **EP 0 787 736 A1**
(43) Date of publication of application: **06.08.1997**
(21) Application number: 97300518.4
(22) Date of filing: 28.01.1997
(51) Int. Cl.: C07F 7/08, C07F 7/12

(54) **Process for reacting organodisilanes with organic halides**

(30) Priority: 31.01.1996 US 593316
(71) Applicant: DOW CORNING CORPORATION, Midland Michigan 48686-0994 (US)
(72) Inventor: Bank, Howard Marvin, Freeland, Michigan 48623 (US); Naasz, Brian Michael, DeWitt, Michigan 48820 (US); Nguyen Binh Thanh, Midland, Michigan 48640 (US)
(74) Representative: Kyle, Diana

(57) **Abstract**

A process is described for reacting organodisilanes with organic halides to form monosilanes. The process comprises heating a mixture of an organodisilane and an organic halide at a temperature within a range of 100 to 350°C. This process is especially useful for reacting alkenyl chlorides, such as allyl chloride, with organodisilanes to form organomonosilanes having alkenyl substitution. The process is also useful for converting a high-boiling organodisilane fraction, from the direct process for forming organosilanes, into more useful monosilanes.

## Description

The present invention is a process for reacting organodisilanes with organic halides to form monosilanes. The process comprises heating a mixture of an organodisilane and an organic halide at a temperature within a range of 100 to 350°C. This process is especially useful for reacting alkenyl chlorides, such as allyl chloride, with organodisilanes to form monosilanes having alkenyl substitution. It is also useful for converting a high-boiling organodisilane fraction from the direct process for manufacture of organosilanes into more useful monosilanes.

The primary commercial method for producing organosilanes involves the reaction of an organic halide with elemental silicon. After the desired organosilanes are recovered from the product mixture by distillation, there remains a high-boiling residue which comprises organodisilanes, among other components. Since organodisilanes have very little commercial value, it is desirable to convert them to more useful monosilanes. The present invention converts organodisilanes to organomonosilanes by heating a mixture comprising an organodisilane and an organic halide at a temperature within a range of 100 to 350°C. In this process, the Si-Si bond of the organodisilane is broken resulting in the formation of two monosilanes, with the organic group of the organic halide substituting on one of the silicon atoms and with the halogen group of the organic halide substituting on the other silicon atom.

U.S. Patent 2,598,435 describes a process where an organohalopolysilane containing a silicon-silicon linkage is heated at an elevated temperature to rupture the silicon-silicon bond and to obtain a material of lower molecular weight.

U.S. Patent 2,474,087 teaches the reaction between an organic halide and a polyhalopolysilane, such as hexachlorodisilane, can be carried out at a temperature between 100 and 450°C. No reference is made therein to organohalodisilanes.

U.S. Patent No. 2,681,355 discloses that when organohalodisilanes are cracked by the heat method of U.S. Patent No. 2,598,435, extensive coking of the reactor will take place. This coking problem is eliminated in the subject patent by the addition of hydrogen chloride to the process.

Numerous other methods have been reported where the heat cracking of organodisilanes is conducted in the presence of other compounds to facilitate the reaction and to avoid the coking problem.

For instance, U.S. Patent 2,787,627 claims a method where a solution of trimethyltriethyldisilane is diluted in ethyl bromide and made to react upon the addition of dry bromine to the process along with refluxing.

U.S. Patent 3,772,347 shows a process were organochlorodisilanes are reacted with an organic chloride in the presence of a transition metal complex comprising palladium and phosphorous.

U.S. Patent 4,962,219 provides a process where an organohalodisilane is contacted with an organic halide in the presence of a metal, such as aluminum, which serves as a halogen acceptor, at a temperature above 150°C.

We have unexpectedly discovered that a mixture comprising an organic halide and an organodisilane can be heated at a temperature within a range of 100 to 350°C. to form monosilanes. In this process, coking does not occur and catalysts or other reactive compounds as described in the above art are not required.

The present invention is a process for forming monosilanes from organodisilanes and comprises heating a mixture essentially consisting of an organodisilane described by formula R¹ ₙSi₂X₆₋ₙ and an organic halide described by formula R²X at a temperature within a range of 100 to 350°C., where each R¹ is an independently selected monovalent hydrocarbon radical comprising one to 18 carbon atoms, R² is a monovalent hydrocarbon radical comprising one to 18 carbon atoms, each X is independently selected from chlorine or bromine atoms and n=1 to 6.

Heating of the mixture of organodisilane and organic halide is effected in any standard pressurizable reactor suitable for contact with halosilanes. The process may be run as a batch, semi-continuous or continuous process.

The mixture of the present process comprises organodisilanes described by formula R¹ ₙSi₂X₆₋ₙ, where each R¹ is an independently selected monovalent hydrocarbon radical comprising one to 18 carbon atoms and n=1 to 6. R¹ is, for example, an alkyl such as methyl, ethyl, propyl, tert-butyl and octadecyl; cycloalkyl such as cyclopentyl or cyclohexyl; alkenyl such as vinyl, allyl and hexenyl; cycloalkenyl such as cyclopentenyl or cyclohexenyl; aryl such as phenyl, tolyl and naphthyl; and aralkyl such as benzyl, beta-phenylethyl and beta-phenylpropyl. Preferred is when R¹ is methyl. The value of n is any value from one to six. It is preferred that n be a value from four to six. Most preferred is when n is six. A preferred organodisilane for use in our process is hexamethyldisilane. The claimed process is used to convert a mixture of organodisilanes of the above formula into monosilanes.

The present process is also useful for converting an organodisilane, containing a high-boiling fraction resulting from the reaction of an organic halide with elemental silicon, to useful monosilanes. In a typical process for reacting an organic halide with elemental silicon (the Direct Process), the reaction is conducted at a temperature of 300 to 350°C. in the presence of suitable catalysts, gaseous product, excess feed and fine particulates are continuously removed from the process. The removed materials are subsequently distilled to recover monosilanes, leaving a "high-boiling fraction." A preferred high-boiling fraction for use in the present process is one with a boiling point above 70°C. resulting from the distillation of monosilanes from the reaction product of the Direct Process. A typical composition for such a high-boiling fraction comprises 50-60 weight percent organodisilanes. This high-boiling fraction, useful in the present process, is described in further detail in U.S. Patent 5,430,168. In some instances, it may be desirable to pretreat the high-boiling fraction by a process such as filtration to remove particulates.

In addition to organodisilanes, the mixture of our process comprises an organic halide described by formula R²X, where R² is a monovalent hydrocarbon radical comprising one to 18 carbon atoms and each X is independently selected from bromine or chlorine atoms. Examples of useful structures for R² are the same as those described for R¹. It is also preferred that the R² substituent of the organic halide be an alkenyl radical. It is preferred that X be chlorine. The preferred organic halide for use in this process is allyl chloride.

The mole ratio of organic halide to organodisilane is not critical to our process and can be varied from 0.1:1 to 10:1. However, it is preferred that the mole ratio of organic halide to organodisilane be at least 1:1. Even more preferred is when the organic halide is present in the process in slight to moderate stoichiometric excess, that is within a range of 1:1 to 3:1.

The present process is conducted at a temperature within a range of 100 to 350°C. Preferred is when the process is conducted at a temperature within a range of 150 to 250°C. Our process does not require the presence of a catalyst at these described temperatures. The optimum temperature for the present process depends upon the organodisilane and organic halide added. In general, the greater the number of organic substituents substituted on the silicon atoms of the organodisilane the lower an acceptable temperature will be. Likewise, the greater the number of organic substituents substituted on the silicon atoms, then the faster the reaction occurs. The time to complete conversion of the organodisilane to monosilanes varies from a few hours to several days.

The following examples are provided to illustrate the present invention. The reactions reported in the examples were conducted in sealed Pyrex™ glass tubes. A reaction mixture as described in each example was placed in the glass tube and cooled in an isopropyl alcohol (IPA)/dry ice bath. The tube was then heat sealed and subsequently heated to the temperature and for the time, described for each example. After the described reaction period, the contents of the tube were cooled and analyzed by gas chromatography using a flame ionization detector (GC-FID). The results are reported as the area percent (area %) under the GC-FID trace. n the formulas herein, Me is methyl.

### Example 1

The reaction mixture comprised 0.43 g (0.003 mole) of Me₃SiSiMe₃ and 0.33 g (0.004 mole) of allyl chloride. The mixture was heated at 150°C. for 54 hours, then cooled and analyzed by GC-FID. The analysis indicated the presence of no Me₃SiSiMe₃, 4.2 area % of allyl chloride, 61.3 area % of allylSiMe₃ and 31.9 area % of Me₃SiCl.

### Example 2

The reaction mixture comprised 0.43 g of Me₃SiSiMe₃ and 0.33 g of allyl chloride. The mixture was heated at 200°C. for 6 hours, then cooled and analyzed by GC-FID. The analysis indicated the presence of no Me₃SiSiMe₃, 6.1 area % allyl chloride, 59.0 area % allylSiMe₃ and 31.6 area % Me₃SiCl.

### Example 3

The reaction mixture comprised 0.56 g (0.003 mole) of Me₃SiSiMeCl₂ and 0.3 g (.004 mole) of allyl chloride. The mixture was heated at 200°C. for 26 hours, then cooled and analyzed by GC-FID. The analysis indicated the presence of 3.4 area % Me₃SiSiMeCl₂, 41.9 area % allyl chloride, 2.2 area % of allylSiMeCl₂ and 41.9 area % of Me₃SiCl.

### Example 4

The reaction mixture comprised 0.56 g (0.003 mole) of ClMe₂SiSiMe₂Cl and 0.3 g (0.004 mole) of allyl chloride. The mixture was heated at 200°C. for 17 hours, then cooled and analyzed by GC-FID. The analysis indicated the presence of no ClMe₂SiSiMe₂Cl, no allyl chloride, 50.0 area % allylSiMeCl₂ and 28.4 area % of Me₂SiCl₂.

### Example 5

The reaction mixture comprised 0.68 g (0.003 mole) of Cl₂MeSiSiMeCl₂ and 0.3 g (0.004 mole) of allyl chloride. The mixture was heated at 200°C. for 17 hours, then cooled and analyzed by GC-FID. The analysis indicated the presence of 17.2 area % Cl₂MeSiSiMeCl₂, 20.2 area % allyl chloride, 31.9 area % allylSiMeCl₂ and 12 area % MeSiCl₃.

## Claims

1. A process for forming monosilanes from organodisilanes, the process comprising heating a mixture essentially consisting of an organodisilane described by formula R¹ ₙSi₂X₆₋ₙ and an organic halide described by formula R²X at a temperature within a range of 100 to 350°C., where each R¹ is an independently selected monovalent hydrocarbon radical comprising one to 18 carbon atoms, R² is a monovalent hydrocarbon radical comprising one to 18 carbon atoms, each X is independently selected from chlorine or bromine atoms and n=1 to 6.

2. A process according to claim 1 where the organodisilane is hexamethyldisilane.

3. A process according to claim 1 where the mixture comprises a high-boiling mixture, resulting from distillation of the product of the reaction of an organic halide and elemental silicon at a temperature of 300 to 350°C. where the high-boiling mixture contains the organodisilane as a component thereof.

4. A process according to claim 1 where the organic halide is allyl chloride.

5. A process according to claim 1 where the mole ratio of organic halide to organodisilane is within a range of 0.1:1 to 10:1.

6. A process according to claim 1 where the temperature is within a range of 100 to 350°C.
